(19) 
Europäisches Patentamt
European Patent Office
Office européen des brevets

(11) **EP 4 614 920 A1**

(12) **EUROPEAN PATENT APPLICATION**
published in accordance with Art. 153(4) EPC

(43) Date of publication:
**10.09.2025 Bulletin 2025/37**

(21) Application number: **23884424.5**

(22) Date of filing: **30.08.2023**

(51) International Patent Classification (IPC):
**H04L 41/14** (2022.01)          **G06N 3/08** (2023.01)

(52) Cooperative Patent Classification (CPC):
**G06N 3/08; H04L 41/0893; H04L 41/14**

(86) International application number:
**PCT/CN2023/115874**

(87) International publication number:
**WO 2024/093487 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022  CN 202211344273**

(71) Applicant: **ZTE CORPORATION**
**Shenzhen, Guangdong 518057 (CN)**

(72) Inventors:
• **ZENG, Zhaohua**
  **Shenzhen, Guangdong 518057 (CN)**
• **ZHAN, Yong**
  **Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **TRAINING METHOD FOR REINFORCEMENT LEARNING MODEL , ELECTRONIC DEVICE, STORAGE MEDIUM, AND CHIP**

(57)    The present application relates to the technical field of wireless communications, and discloses a training method for a reinforcement learning model, an electronic device, a storage medium, and a chip. The method comprises: acquiring a plurality of pieces of portrait information of a physical communication network at a plurality of target times, wherein each target time comprises a time point or a time period, and the portrait information comprises description information of the physical communication network; respectively acquiring a digital twin network at each of the plurality of target times on the basis of each of the plurality of pieces of portrait information, wherein the digital twin network digitally reproduces the physical communication network; performing first training on a target reinforcement learning model by means of each digital twin network on the basis of at least one preset candidate strategy, wherein the target reinforcement learning model is configured to output a target service action corresponding to input network state information; and using the current network state of the physical communication network to perform second training on the target reinforcement learning model having undergone the first training.

Acquire multiple pieces of portrait information of a physical communication network at a plurality of target times — 101

respectively acquire, based on each of the multiple pieces of portrait information, a digital twin network corresponding to each of the plurality of the target times — 102

Perform first training on a target reinforcement learning model through the digital twin network based on at least one preset candidate policy — 103

Perform second training on the target reinforcement learning model subjected to the first training by using a current network state of the physical communication network — 104

FIG. 1

EP 4 614 920 A1

**Description**

CROSS-REFERENCE TO RELATED APPLICATIONS

This application claims the priority of Chinese patent application No. 202211344273.9 filed on October 31, 2022, the entirety of which is incorporated hereby by reference.

TECHNICAL FIELD

The present application belongs to the technical field of wireless communications, and specifically relates to a method for training a reinforcement learning model, an electronic device, a storage medium, and a chip.

BACKGROUND

The reinforcement learning algorithm is widely applied to the field of internet technology, but the application effect in mobile communication networks is not ideal. In the existing art, to obtain a reinforcement learning model with an excellent performance for a policy optimization, a large number of trials and errors are desired to optimize the model, so that the optimized reinforcement learning model is to be applied to decide an optimal policy within a preset range in an application scenario. However, the trial and error in a mobile communication network is costly, and it is difficult to control fluctuations and risks concerning a model performance generated in a process of optimizing the model.

SUMMARY

In a first aspect, the present disclosure provides a method for training a reinforcement learning model, including: acquiring multiple pieces of portrait information of a physical communication network at a plurality of target times, each of the target times includes a time point or a time period, and each of the multiple pieces of portrait information includes description information of the physical communication network; respectively acquiring, based on each of the multiple pieces of portrait information, a digital twin network corresponding to each of the plurality of target times, the digital twin network digitally replicating the physical communication network; performing first training on a target reinforcement learning model through the digital twin network based on at least one preset candidate policy, the target reinforcement learning model being configured to output a target service action corresponding to input network state information; and performing second training on the target reinforcement learning model subjected to the first training by using a current network state of the physical communication network.

In a second aspect, the present disclosure provides an electronic device, including a processor and a memory, the memory stores thereon programs or instructions to be executed by the processor, the programs or instructions, when executed by the processor, cause the processor to implement the method for training a reinforcement learning model according to the first aspect.

In a third aspect, the present disclosure provides a computer-readable storage medium having programs or instructions stored thereon, the programs or instructions, when executed by a processor, cause the processor to implement the method for training a reinforcement learning model according to the first aspect.

In a fourth aspect, the present disclosure provides a chip, including a processor and a communication interface coupled to the processor, the processor is configured to execute programs or instructions to implement the method for training a reinforcement learning model according to the first aspect.

BRIEF DESCRIPTION OF DRAWINGS

FIG. 1 is a schematic flowchart of a method for training a reinforcement learning model according to an embodiment of the present application;
FIG. 2 is a schematic flowchart illustrating sub-operations of a method for training a reinforcement learning model according to an embodiment of the present application;
FIG. 3 is a schematic flowchart illustrating sub-operations of a method for training a reinforcement learning model according to an embodiment of the present application;
FIG. 4 is a schematic flowchart of a method for training a reinforcement learning model according to an embodiment of the present application;
FIG. 5 is a schematic structural diagram of a physical communication network and a digital twin network according to an embodiment of the present application;

FIG. 6 shows a schematic flowchart of an embodiment of the present application;

FIG. 7 shows a schematic flowchart of an embodiment of the present application; and

FIG. 8 shows a schematic structural diagram of an electronic device according to an embodiment of the present application.

DETAIL DESCRIPTION OF EMBODIMENTS

The technical solutions in the embodiments of the present application will be clearly described below with reference to the accompanying drawings in the embodiments of the present application. Apparently, the described embodiments are only part, but not all, of the embodiments of the present application. All other embodiments obtained by one of ordinary skill in the art based on the embodiments in the present application belong to the protection scope of the present application.

The terms "first" and "second" and the like in the description and the claims of the present application, are used for distinguishing between similar objects and are not necessarily for describing a particular sequential or chronological order. It is to be understood that the terms so used are interchangeable under appropriate circumstances such that the embodiments of the present application are capable of operating in other sequences than those illustrated or otherwise described herein, and the terms "first" and "second" are generally used herein in a generic sense and do not limit the number of objects, e.g., a first object may be one or more than one. In addition, "and/or" in the specification and claims means at least one of listed objects, and a character "/" generally means that the former and latter related objects are in an "or" relationship.

A method for training a reinforcement learning model according to an embodiment of the present application is described in detail below with reference to the accompanying drawings through some implementations and application scenarios thereof.

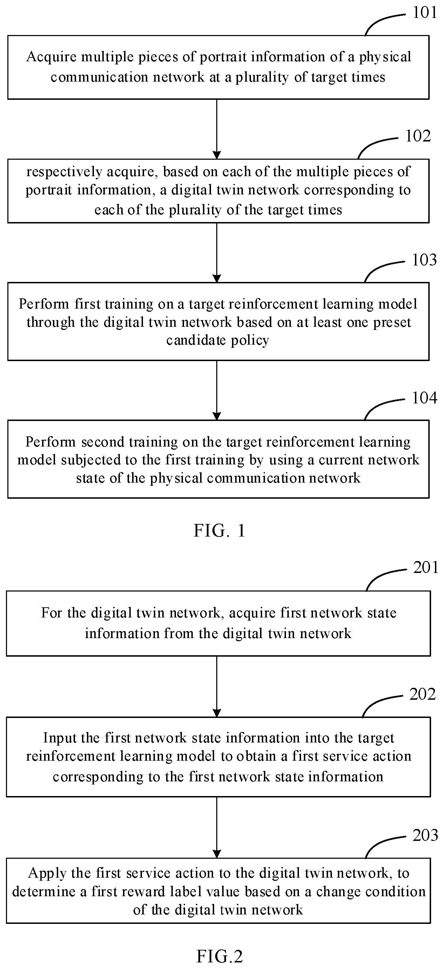

FIG. 1 is a schematic flowchart of a method for training a reinforcement learning model according to an embodiment of the present application. The method may be performed by an electronic device including a server and/or a terminal device. Referring to FIG. 1, the method may include following operations 101 to 104.

At operation 101, acquiring multiple pieces of portrait information of a physical communication network at a plurality of target times, each of the plurality of target times including a time point or a time period, and each of the multiple pieces of portrait information including description information of the physical communication network.

In some implementations, the description information, associated with a physical communication network entity, included in the portrait information may provide a building basis for building a digital twin network.

At operation 102, respectively acquiring, based on each of the multiple pieces of portrait information, a digital twin network corresponding to each of the plurality of target times, the digital twin network digitally replicating the physical communication network.

In the embodiment of the present application, a digital twin network virtual entity of the physical communication network can be built digitally based on the multiple pieces of portrait information of the physical communication network acquired at the plurality of target times, the digital twin network virtual entity includes a twin/replication of entities such as a user, a channel/environment, a base station, a transmission network, a core network and the like in the physical communication network, each of which has the same performance as a corresponding entity in the physical communication network, and can also enable real-time interactive mapping with the corresponding entity in the physical communication network.

At operation 103, performing first training on a target reinforcement learning model through the digital twin network based on at least one preset candidate policy, the target reinforcement learning model being configured to output a target service action corresponding to input network state information.

In an embodiment of the present application, the at least one preset candidate policy may be input into the target reinforcement learning model of the digital twin network for the first training, the target reinforcement learning model subjecting to the first training can identify specific types of patterns, such as a Q table in a Q-learning algorithm and neural network weight information of a deep neural network (DNN) algorithm.

At operation 104, performing second training on the target reinforcement learning model subjected to the first training by using a current network state of the physical communication network.

In an embodiment of the present application, through the interactive mapping between the physical communication network and the digital twin network, the physical communication network receives the target reinforcement learning model subjected to the first training in the digital twin network, and performs the second training on the target reinforcement learning model subjected to the first training, to train and optimize the target reinforcement learning model.

In the embodiment of the present application, firstly, a digital twin network is built, and a digital twin network virtual entity of the physical communication network is built based on the related portrait information of the physical communication network entity; secondly, by inputting a candidate policy into a target reinforcement learning model in the digital twin network, first training is performed on the target reinforcement learning model, and the target reinforcement learning model subjected to the first training is transmitted to the physical communication network; then, second training is performed on the target reinforcement learning model subjected to the first training by using a current network state in the physical communication network, to implement a continuous optimization of the target reinforcement learning model. The present disclosure makes use of the characteristic of low cost trial and error of the digital twin technology to train a model through a limited number of candidate policies and an interaction between the physical communication network and the digital twin network, thereby effectively reducing a cost of the mobile communication network for optimizing the model, and reducing a performance risk in a process of optimizing the model.

FIG. 2 shows an implementation flow of operation 103 in an implementation, and the operation 103 shown in FIG. 2 may include following operations 201 to 203.

At operation 201, for the digital twin network, acquiring first network state information from the digital twin network.

In some implementations, the first network state information is used as input information of the target reinforcement learning model.

At operation 202, inputting the first network state information into the target reinforcement learning model to obtain a first service action corresponding to the first network state information, the target reinforcement learning model outputting the first service action according to at least one candidate policy based on the first network state information.

In some implementations, the target reinforcement learning model may identify the first network state information and perform a calculation, to obtain a first service action corresponding to the first network state information according to at least one candidate policy, and output the first service action.

At operation 203, applying the first service action to the digital twin network, to determine a first reward label value based on a change condition of the digital twin network, the first reward label value corresponding to the first network state information and the first service action.

After the first service action is obtained and performed by the digital twin network, the digital twin network may have a change, and based on a change condition of the digital twin network, a first reward label value corresponding to the change condition is obtained. The first reward label value reflects an influence of the first service action, output by processing the first network state information in the target reinforcement learning model, on the digital twin network.

In the embodiment of the present application, after the digital twin network initializes the target reinforcement learning model, data structures of input information and output information of the target reinforcement learning model and a method for calculating the reward label value are determined. In some implementations, determining the data structures includes: determining input information and output information included in the target reinforcement learning model, and determining data formats of the input information and the output information. The method for calculating the reward label value may be a predefined calculation rule/equation (i.e., the at least one candidate policy described above), or may be another artificial intelligence (AI) model to be trained. Then, the first network state information in the digital twin network is taken as an input of the target reinforcement learning model, and processed by the target reinforcement learning model to obtain a corresponding first service action. The digital twin network performs the first service action, and based on the change condition in network state of the digital twin network after the digital twin network performing the first service action, a corresponding first reward label value is obtained, thereby completing the first training on the target reinforcement learning model, and a preliminary optimization of the target reinforcement learning model is achieved.

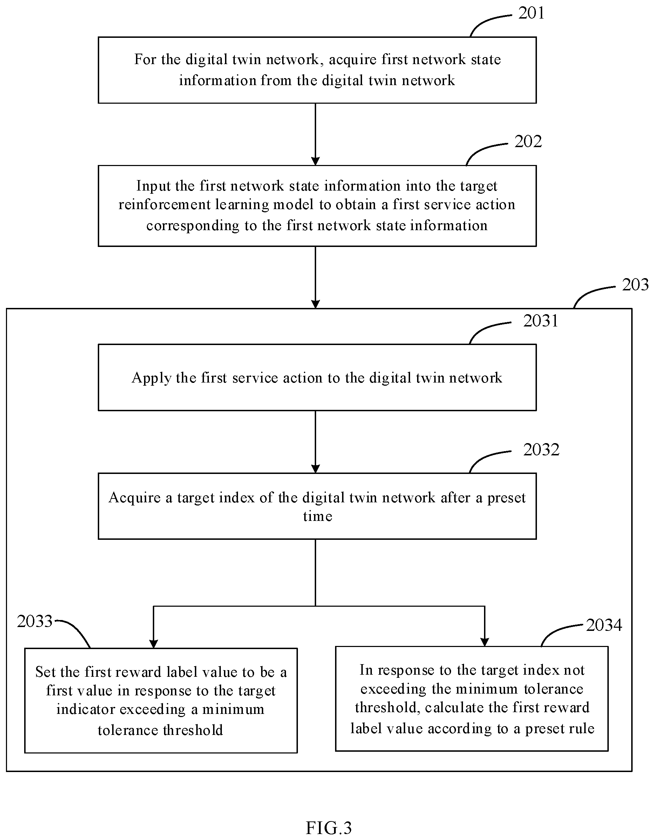

FIG. 3 shows an implementation flow of operation 203 in an implementation, and the operation 203 shown in FIG. 3 may include following operations 2031 to 2034.

At operation 2031, applying the first service action to the digital twin network.

At operation 2032, acquiring a target index of the digital twin network after a preset time.

The target index indicates a change in the digital twin network after the digital twin network performing the first service action, and represents performance levels of the digital twin network under different conditions in a numerical mode.

At operation 2033, setting the first reward label value to be a first value in response to the target indicator exceeding a minimum tolerance threshold.

If the target index exceeds the minimum tolerance threshold, it indicates that the digital twin network generates an unexpected change after executing the first service action, and the performance of the digital twin network is deteriorated, and thus the first reward label value is set to be a first value for indicating a recommended value of a certain candidate policy being lower.

At operation 2034, in response to the target index not exceeding the minimum tolerance threshold, calculating the first reward label value according to a preset rule.

If the target index does not exceed the minimum tolerance threshold, it indicates that the policy corresponding to the first service action output by the target reinforcement learning model can be used as a selectable policy, and the first reward label value is calculated according to a preset rule to obtain the target reinforcement learning model optimized by the first training.

In the embodiment of the present application, by applying the first service action output by the target reinforcement learning model to the digital twin network, a target index capable of indicating a change condition of the digital twin network is obtained after a preset time, and is compared with a minimum tolerance threshold to determine a corresponding operation to be executed; in response to the target index exceeding the minimum tolerance threshold, the first reward label value is set to be a first value for indicating a recommended value of a certain candidate policy being lower, so that the risks of optimizing the model can be controlled; in response to the target index not exceeding the minimum tolerance threshold, the target reinforcement learning model optimized by the first training is obtained and a first reward label value is calculated, so that a great risk is prevented from bringing to the physical communication network during the subsequent second training, and the continuous optimization of the target reinforcement learning model can be implemented.

In an implementation, the method may further include: in response to the target index exceeding the minimum tolerance threshold, adjusting the first service action to be a service action previous to the preset time.

If the target index exceeds the minimum tolerance threshold, the first service action causes deteriorated performance of the digital twin network, and therefore, the first service action is adjusted to be the service action previous to the preset time to recover the performance of the digital twin network.

In an implementation, the target index includes at least one of: a success rate of establishing a cell radio resource control (RRC) connection, a success rate of establishing an evolved radio access bear (ERAB), a radio connectivity rate, a switching success rate, a radio disconnection rate and an ERAB disconnection rate.

These target indexes each indicate a network condition of the digital twin network before and after the first service action is executed. Each target index is compared with the minimum tolerance threshold to determine a current network condition of the digital twin network, and an operation to be performed is determined based on the network condition of the digital twin network before and after the first service action is executed. If the target index exceeds the minimum tolerance threshold, the target reinforcement learning model is adjusted, and if the target index does not exceed the minimum tolerance threshold, the first reward label value is calculated, the first training is completed, and an optimization is continued.

In an implementation, the target reinforcement learning model subjected to the first training includes: a correspondence relationship between network state information, a service action, and a reward label value.

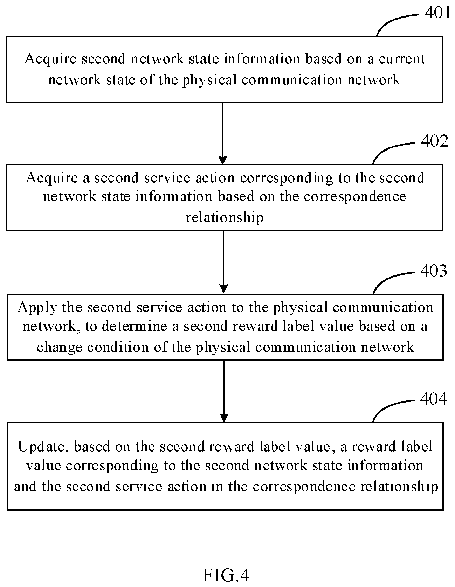

FIG. 4 shows an implementation flow of operation 104, and as shown in FIG. 4, operation 104 may include following operations 401 to 404.

At operation 401, acquiring second network state information based on a current network state of the physical communication network.

At operation 402, acquiring a second service action corresponding to the second network state information based on the correspondence relationship.

At operation 403, applying the second service action to the physical communication network, to determine a second reward label value based on a change condition of the physical communication network.

The physical communication network receives the target reinforcement learning model subjected to the first training, and performs the same training process as that in the digital twin network, that is, based on a second network state of the physical communication network, outputs a corresponding second service action after the second network state being input into the target reinforcement learning model, applies the second service action to the physical communication network, and acquires a corresponding second reward label value based on a change condition of the physical communication network at that time. Likewise, the second reward label value reflects a recommended value for executing the second service action under the second network state information.

At operation 404, updating, based on the second reward label value, the reward label value corresponding to the second network state information and the second service action in the correspondence relationship.

The second reward label value is an optimized reward label value obtained after the target reinforcement learning model is subjected to the first training and the second training, and is used for updating the reward label value corresponding to the second network state information and the second service action to complete the optimization of the target reinforcement learning model.

In the embodiment of the present application, the physical communication network continues to optimize the received target reinforcement learning model subjected to the first training, an optimization operation on the target reinforcement learning model performed in the physical communication network is the same as that performed in the digital twin network. Finally, a second reward label value is acquired and used as an updated value of the target reinforcement learning model subjected to the second training, thereby completing the continuous optimization of the target reinforcement learning model. The target reinforcement learning model subjected to the first training and the second training utilizes the characteristic of low-cost trial and error of the digital twin technology, and is optimized through an interaction between the digital twin network and the physical communication network, and thus the cost in the process of optimizing is effectively reduced, and the performance risk is effectively controlled.

In an implementation, after operation 104, the method may further include: continuing to perform the second training on the target reinforcement learning model by using a current network state of the physical communication network, until the target reinforcement learning model is converged.

In the embodiment of the present application, the training on the target reinforcement learning model is repeatedly executed to obtain a result, and the result is evaluated and adjusted continuously, until the target reinforcement learning model is converged, so that the performance of the physical communication network and the performance of the digital twin network tend to be stable, and the optimization of the target reinforcement learning model is completed.

In an implementation, the target reinforcement learning model is determined to be converged based on at least one of following conditions: a total number of times of second training performed reaching a first threshold; a training duration of the second training reaching a second threshold; or after multiple times of second training, a change in the target reinforcement learning model being less than a third threshold.

The convergence of the target reinforcement learning model can be controlled by controlling at least one of a total number of times of training, a training duration or a change trend of the target reinforcement learning model. If the number of times of second training reaches a first threshold and the training duration of the second training reaches a second threshold, the target reinforcement learning model is determined to be converged, thereby avoiding excessive training on the target reinforcement learning model. The target reinforcement learning model may also be determined to be converged if a change in the target reinforcement learning model subjected to multiple times of second training is less than a third threshold, so that the target reinforcement learning model can be determined to be converged in response to the change in the target reinforcement learning model tending to be stable even if the number of times of training on the target reinforcement learning model does not reach the first threshold and the training duration does not reach the second threshold.

In an implementation, after the target reinforcement learning model is converged, the method may further include: calibrating the digital twin network based on a difference between the target reinforcement learning model being converged and the target reinforcement learning model subjected to the first training.

The target reinforcement learning model being converged is compared with the target reinforcement learning model subjected to the first training. If there is an obvious difference between the target reinforcement learning model being converged and the target reinforcement learning model subjected to the first training, it indicates that that the replication or prediction of the digital twin network for the physical communication network is inaccurate and is to be calibrated, which facilitates the digital twin network and the physical communication network having the same structure and performance, and real-time interactive mapping between the digital twin network and the physical communication network can be implemented.

In some implementations, a calibration of the digital twin network may be implemented in a conventional manner existing in the art, and thus is not specifically limited in the embodiments of the present application.

In some implementations, the portrait information may include at least one of: configuration information of the physical communication network, state information of the physical communication network, attribute information of the physical communication network, attribute information of a user terminal in the physical communication network, service information of the user terminal, or environment information of a mobile channel of the user terminal.

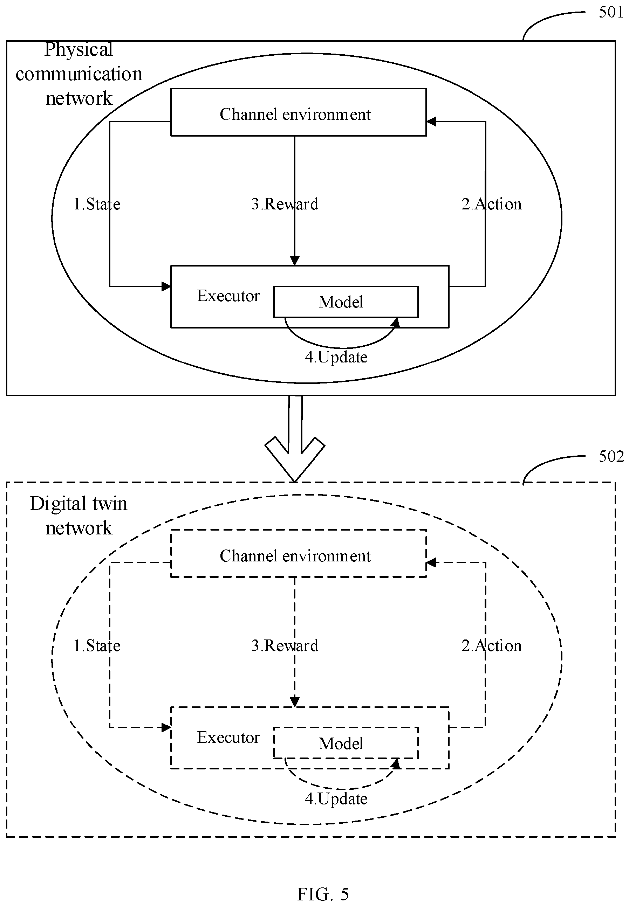

As shown in FIG. 5, by acquiring various pieces of information of the physical communication network 501, a virtual entity of a digital twin network 502 of the physical communication network 501 is built, and the digital twin network 502 has the same structure and performance as the physical communication network 501.

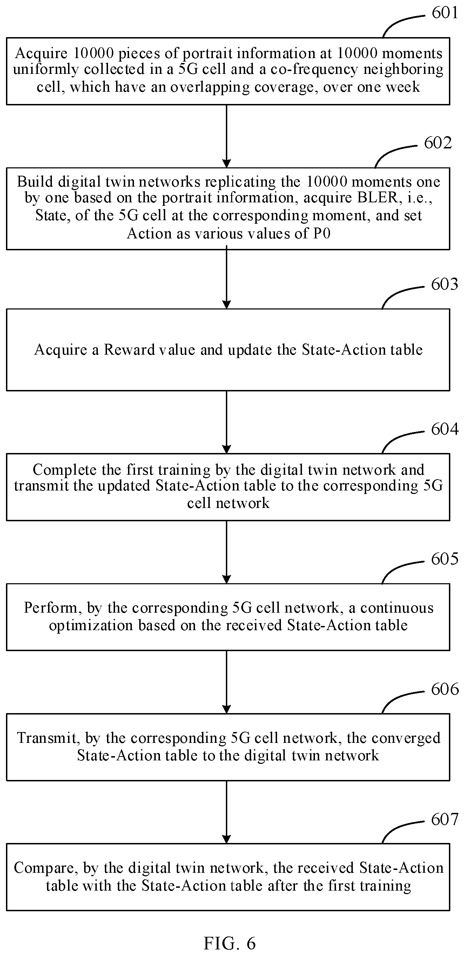

In an embodiment, in a 5G cell and a co-frequency neighboring cell which have an overlapping coverage (i.e., the 5G cell has a coverage overlapped with a coverage of the co-frequency neighboring cell), a reinforcement learning model is trained by Q-learning to determine a target receiving power P0 of a physical uplink shared channel (PUSCH). The flow is as shown in FIG. 6, and includes following operations 601 to 607.

Table 1 is an initialized State-Action table in the embodiment, $BLER^{current}$ represents an uplink average data block error rate (BLER) of the 5G cell over the previous 15 minutes, $BLER^{current}$ is State, a PUSCH target receiving power P0 is Action, each element in the table is an accumulated reward (Reward) value corresponding to State-Action, and an initial Reward value is 0.

Table 1.

|  | P0-100dBm | P0-94dBm | P0-88dBm | P0-82dBm | P0-76dBm |
|---|---|---|---|---|---|
| $BLER^{current} \leq 5\%$ | 0 | 0 | 0 | 0 | 0 |
| $5\% < BLER^{current} \leq 10\%$ | 0 | 0 | 0 | 0 | 0 |
| $10\% < BLER^{current} \leq 15\%$ | 0 | 0 | 0 | 0 | 0 |
| $15\% < BLER^{current} \leq 25\%$ | 0 | 0 | 0 | 0 | 0 |
| $BLER^{current} > 25\%$ | 0 | 0 | 0 | 0 | 0 |

At operation 601, acquiring 10000 pieces of portrait information at 10000 moments uniformly collected in a 5G cell and a co-frequency neighboring cell, which have an overlapping coverage, over a previous one week, each piece of portrait information including software and hardware configuration, key performance indicator (KPI), log information and user portrait information at a corresponding moment of the 5G cell and the co-frequency neighboring cell which have the overlapping coverage. In some implementations, the user portrait information includes service information and environment information of a mobile channel of the user terminal, which are automatically collected by the 5G cell.

At operation 602, building digital twin networks replicating the 10000 moments one by one based on the portrait information, each digital twin network being built based on portrait information at a corresponding moment of the 5G cell and the co-frequency neighboring cell which have the overlapping coverage; and acquiring $BLER^{current}$, i.e., State, of the 5G cell at the corresponding moment, and setting Action as P0=-100dBm, P0=-94dBm, P0=-88dBm, P0=-82dBm, and P0=-76dBm.

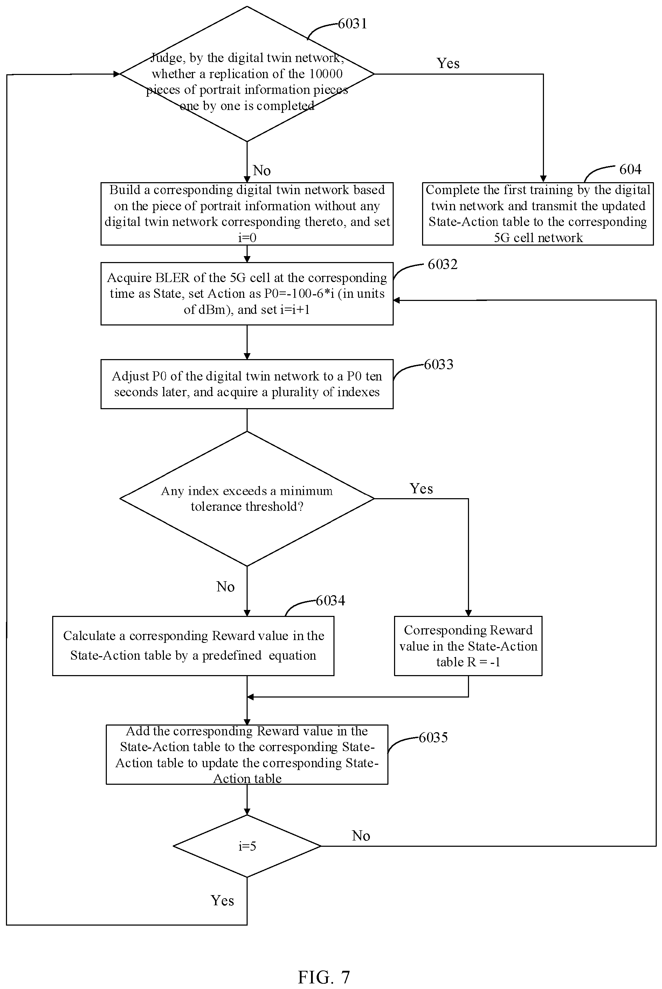

At operation 603, acquiring a Reward value and updating the State-Action table. The flow is as shown in FIG. 7, and includes following operations 6031 to 6035.

At operation 6031, judging, by the digital twin network, whether a replication of the 10000 pieces of portrait information pieces one by one is completed; if the replication of the 10000 pieces of portrait information pieces one by one is completed, ending operation 603; and if the replication of the 10000 pieces of portrait information pieces one by one is not completed, building a corresponding digital twin network based on the piece of portrait information without any digital twin network corresponding thereto, and setting i=0.

At operation 6032, acquiring $BLER^{current}$ of the 5G cell at a corresponding time as State, setting Action as P0=-100-6*i (in units of dBm), and setting i=i+1.

At operation 6033, adjusting P0 of the digital twin network as a P0 ten seconds later, and acquiring a success rate of establishing a radio resource control (RRC) connection, a success rate of establishing an evolved radio access bear (ERAB), a radio connectivity rate, a switching success rate, a radio disconnection rate and an ERAB disconnection rate of the 5G cell within the ten seconds; and respectively comparing each of above indexes with a minimum tolerance threshold, and if any of the indexes exceeds the minimum tolerance threshold, adjusting P0 to a P0 ten seconds ago, which corresponds to a Reward value R=-1 in the State-Action table.

At operation 6034, if none of the indexes exceeds the minimum tolerance threshold, letting $n \in \{1,...,N\}$ to represent an index of the co-frequency neighboring cell having the coverage overlapped with that of the 5G cell, N representing a total number of co-frequency neighboring cells, and $BLER_T^{neighbor,n}$ representing an uplink average BLER of the neighboring cell n at a twin moment T; and acquiring corresponding $BLER_{T+1}^{current}$ and $BLER_{T+1}^{neighbor,n}$ after P0 is adjusted by a specified time length (i.e., at a moment T+1) in the 5G cell, and calculating a corresponding Reward value at the moment in the State-Action table by:

$$R = \left| BLER_T^{current} - BLER^{target\ value} \right| - \left| BLER_{T+1}^{current} - BLER^{target\ value} \right| +$$
$$\frac{\beta}{N} \sum_{n=1}^{N} \left( \left| BLER_T^{neighbor,n} - BLER^{target\ value} \right| - \left| BLER_{T+1}^{neighbor,n} - BLER^{target\ value} \right| \right).$$

At operation 6035, adding the corresponding Reward value in the State-Action table to the corresponding State-Action table to update the corresponding State-Action table; accumulating the Reward value CR$_{State,Action}$ = $\lambda$*CR$_{State,Action}$+(1-$\lambda$)*R, $\lambda$=0.9; and if i=5, returning to operation 6031; otherwise, returning to operation 6032.

At operation 604, transmitting, by the digital twin network, the State-Action table updated in response to completing the first training to a corresponding 5G cell network.

At operation 605, performing, by the corresponding 5G cell network, a continuous optimization based on the received State-Action table by a process of optimizing, the process of optimizing including following operations 6051 to 6056.

At operation 6051, setting an initial period T=1, with each period being 15 minutes, and setting an initial $BLER^{target\ value}$ = 10%, and an initial neighbor cell weight $\beta$ = 0.8.

At operation 6052, acquiring $BLER_T^{current}$ of the 5G cell in the period T. In some implementations, $BLER_T^{current}$ cannot be acquired if the 5G cell runs for less than 15 minutes in the period T, and then let $BLER_T^{current} = BLER^{target\ value}$; based on $BLER_T^{current}$ and the State-Action table received by the 5G cell network, a row of the State in the State-Action table corresponding to $BLER_T^{current}$ is positioned, and then Action is determined by an ε greedy algorithm, in some implementations, the greedy algorithm includes: $\varepsilon = 1/\sqrt{T}$, generating a random floating point number between 0 and 1; if the random floating point number is less than ε, selecting Action randomly; if the random floating point number is not less than ε, selecting Action with a largest accumulated Reward value in the row of the specified State; and if accumulated Reward values of more than one Actions are largest, selecting one of the Actions randomly.

At operation 6053, if the determined P0 is different from a current P0, adjusting the P0 and proceeding to operation 6054; and if the determined P0 is the same as the current P0, proceeding to step 6055.

At operation 6054, adjusting P0 of the digital twin network to a P0 ten seconds later, and acquiring a success rate of establishing a radio resource control (RRC) connection, a success rate of establishing an evolved radio access bear (ERAB), a radio connectivity rate, a switching success rate, a radio disconnection rate and an ERAB disconnection rate of the 5G cell within the ten seconds; and respectively comparing each of above indexes with a minimum tolerance threshold, and if any of the indexes exceeds the minimum tolerance threshold, adjusting P0 to a P0 ten seconds ago, which corresponds to a Reward value R=-1 in the State-Action table.

At operation 6055, if none of the indexes exceeds the minimum tolerance threshold, letting $n\in\{1,...,N\}$ to represent an index of the co-frequency neighboring cell having a coverage overlapped with that of the 5G cell, N representing a total number of co-frequency neighboring cells, and $BLER_{\mathrm{T}}^{\mathrm{neighbor},n}$ representing an uplink average BLER of the neighboring cell n at a twin moment T; and acquiring corresponding $BLER_{\mathrm{T+1}}^{\mathrm{current}}$ and $BLER_{\mathrm{T+1}}^{\mathrm{neighbor},n}$ after P0 is adjusted by a specified time length (i.e., at a

moment T+1) in the 5G cell, and calculating a corresponding Reward value at the moment in the State-Action table by:

$$R = \left| BLER_{T}^{\mathrm{current}} - BLER^{\mathrm{t\,arg\,et\,value}} \right| - \left| BLER_{\mathrm{T+1}}^{\mathrm{current}} - BLER^{\mathrm{t\,arg\,et\,value}} \right| +$$

$$\frac{\beta}{N} \sum_{n=1}^{N} \left( \left| BLER_{\mathrm{T}}^{\mathrm{neighbor},n} - BLER^{\mathrm{t\,arg\,et\,value}} \right| - \left| BLER_{\mathrm{T+1}}^{\mathrm{neighbor},n} - BLER^{\mathrm{t\,arg\,et\,value}} \right| \right).$$

At operation 6056, adding the corresponding Reward value in the State-Action table to the corresponding State-Action table to update the corresponding State-Action table; accumulating the Reward value $CR_{State,Action}$ = $\lambda$ *$CR_{State,Action}$ +(1-$\lambda$)*R, $\lambda$=0.9; and if T<10000, then letting T=T+1 and returning to operation 6052; otherwise, proceeding to operation 606.

At operation 606, transmitting, by the corresponding 5G cell network, the State-Action table converged to the digital twin network.

At operation 607, comparing, by the digital twin network, the received State-Action table with the State-Action table after the first training; and if a difference between values at each pair of corresponding positions in the two tables does not exceed 5%, determining that the digital twin network is normal and is not to be calibrated; otherwise, determining that the digital twin network is to be calibrated.

In an embodiment, in a 5G cell and a co-frequency neighboring cell which have an overlapping coverage, a reinforcement learning model is trained by Q-learning, and used for a load adjustment policy for adjusting a load of the 5G cell, which includes following operations 801 to 807.

In some implementations, Table 2 is an initialized State-Action table in the embodiment. In some implementations, the State includes four states, i.e., idle, relatively idle, relatively busy, and busy, which may be determined based on a utilization rate of physical resource blocks (PRBs), and/or a utilization rate of control channel elements (CCEs), and is not limited here. The Action include three actions, i.e., kicking a user, absorbing a user and no operation, kicking a user and absorbing a user may be implemented by adjusting interoperation parameters, which are not limited here. Each element in the table is an accumulated reward (Reward) value corresponding to State-Action in a period T, and an initial Reward value is 0.

Table 2.

|  | a=kicking a user | a=no operation | a=absorbing a user |
|---|---|---|---|
| s = idle | 0 | 0 | 0 |
| s = relatively idle | 0 | 0 | 0 |
| s = relatively busy | 0 | 0 | 0 |
| s = busy | 0 | 0 | 0 |

At operation 801, acquiring 10000 pieces of portrait information at 10000 moments uniformly collected in a 5G cell and a co-frequency neighboring cell, which have an overlapping coverage, over a previous one week, each piece of portrait information including software and hardware configuration, key performance indicator (KPI), log information and user portrait information at a corresponding moment of the 5G cell and the co-frequency neighboring cell which have the overlapping coverage In some implementations, the user portrait information includes service information and environment information of a mobile channel of the user terminal, which are automatically collected by the 5G cell.

At operation 802, building digital twin networks replicating the 10000 moments one by one based on the portrait information, each digital twin network being built based on portrait information at a corresponding moment of the 5G cell and the co-frequency neighboring cell which have an overlapping coverage; and acquiring a load condition at the corresponding moment of the 5G cell as State, and setting Action as kicking a user, no operation or absorbing a user.

At operation 803, acquiring a Reward value and updating the State-Action table, which includes following operations 8031 to 8036.

At operation 8031, judging, by the digital twin network, whether a replication of the 10000 pieces of portrait information pieces one by one is completed; if the replication of the 10000 pieces of portrait information pieces one by one is completed, ending operation 803; and if the replication of the 10000 pieces of portrait information pieces one by one is not completed, building a corresponding digital twin network based on the piece of portrait information without any digital twin network corresponding thereto, and setting i=0.

At operation 8032, acquiring a load condition at the corresponding moment of the 5G cell as State; if i=0, letting Action to be kicking a user; if i=1, letting Action to be no operation; and if i=2, letting Action to be absorbing a user.

At operation 8033, performing the corresponding Action by the digital twin network, and setting i=i+1; if the decided Action is kicking a user or absorbing a user, performing an operation of kicking a user or absorbing a user in a preset mode, and proceeding to operation 8034; and if the decided Action is no operation, proceeding to operation 8035.

At operation 8034, after the digital twin network performs the operation of kicking the user or absorbing the user for ten seconds, acquiring a success rate of establishing a radio resource control (RRC) connection, a success rate of establishign an evolved radio access bear (ERAB), a radio connectivity rate, a switching success rate, a radio disconnection rate and an ERAB disconnection rate of the 5G cell within the ten seconds; and respectively comparing each of above indexes with a minimum tolerance threshold, and if any of the indexes exceeds the minimum tolerance threshold, returning to a load adjustment policy ten seconds ago, which corresponds to a Reward value R=-1 in the State-Action table.

At operation 8035, if none of the indexes exceeds the minimum tolerance threshold, letting $Payload_T^{\text{current}}$ to represent a total traffic of the 5G cell in the period T; $n \in \{1,...,N\}$ representing an index of a co-frequency neighboring cell, N representing a total number of co-frequency neighboring cells, and $Payload_T^{\text{neighbor},n}$ representing a total traffic of a neighboring cell n in the period T; acquiring corresponding $Payload_{T+1}^{\text{current}}$ and $Payload_{T+1}^{\text{neighbor},n}$ after a specified time length (i.e., at a moment T+1), and calculating a Reward value corresponding to the Action with adjusted parameters in the period T by:

$$R = \min\left(\frac{Payload_{T+1}^{\text{current}}}{Payload_T^{\text{current}}} - 1, 1\right) + \min\left(\frac{\sum_{n=1}^{N} Payload_{T+1}^{\text{neighbor},n}}{\sum_{n=1}^{N} Payload_T^{\text{neighbor},n}} - 1, 1\right).$$

At operation 8036, letting a learning rate $\alpha$ =0.1 and a discount rate $\gamma$ =0.9; adding the corresponding Reward value to the corresponding State-Action table to update the State-Action table; accumulating the Reward value $Q_T^{s,a} = Q_T^{s,a} + \alpha\left(R + \gamma \max Q_{T+1}^{s',a'} - Q_T^{s,a}\right)$, $\max Q_{T+1}^{s',a'}$ representing a maximum accumulated Reward value of all Actions corresponding to a cell state in a period T+1; and if i=3, returning to operation 8031; otherwise, returning to operation 8032.

At operation 804, completing the first training by the digital twin network and transmitting the updated State-Action table to the corresponding 5G cell network.

At operation 805, performing, by the corresponding 5G cell network, a continuous optimization based on the received State-Action table by a process of optimizing, the process of optimizing including following operations 8051 to 8056.

At operation 8051, setting an initial period T=1, with each period being 15 minutes, and setting an initial learning rate $\alpha$ =0.1, and a discount rate $\gamma$ =0.9.

At operation 8052, determining a state of the cell in the period T based on a newly acquired base station/user experience (UE) portrait of the 5G cell, e.g., the base station/UE portrait including an average utilization rate of downlink PRBs and a utilization rate of CCEs of the cell in previous 15 minutes, which are not limited here; and after the state being determined, determining Action by an ε greedy algorithm.

At operation 8053, if the decided Action is kicking a user or absorbing a user, performing an operation of kicking a user or absorbing a user in a preset mode, and proceeding to operation 8054; and if the decided Action is no operation, proceeding to operation 8055.

At operation 8054, after the digital twin network performs the operation of kicking a user or absorbing a user for ten seconds, acquiring a success rate of establishing a radio resource control (RRC) connection, a success rate of establishing an evolved radio access bear (ERAB), a radio connectivity rate, a switching success rate, a radio disconnection rate and an ERAB disconnection rate of the 5G cell within the ten seconds; and respectively comparing each of above indexes with a minimum tolerance threshold, and if any of the indexes exceeds the minimum tolerance threshold, returning to a load adjustment policy ten seconds ago, which corresponds to a Reward value R=-1 in the State-Action table.

At operation 8055, if none of the indexes exceeds the minimum tolerance threshold, letting $Payload_T^{\text{current}}$ to represent a total traffic of the 5G cell in the period T. In some implementations, $Payload_T^{\text{current}}$ cannot be acquired if the 5G cell runs for less than 15 minutes in the period T, and then let $Payload_T^{\text{current}} = Payload_{T+1}^{\text{current}}$ ; $n \in \{1,...,N\}$ represents an index of a co-frequency neighboring cell, and N represents a total number of co-frequency neighboring cells, $Payload_T^{\text{neighbor},n}$ represents a total traffic of a neighboring cell n in the period T, $Payload_T^{\text{neighbor},n}$ cannot be acquired if the neighboring cell runs for less than 15 minutes in the period T, and then let $Payload_T^{\text{neighbor},n} = Payload_{T+1}^{\text{neighbor},n}$ ; $Payload_{T+1}^{\text{current}}$ and $Payload_{T+1}^{\text{neighbor},n}$ corresponding to a period T+1 are acquired, and a Reward value corresponding to the Action with adjusted parameters in the period T is calculated by:

$$R = \min\left(\frac{Payload_{T+1}^{\text{current}}}{Payload_{T}^{\text{current}}} - 1, 1\right) + \min\left(\frac{\sum_{n=1}^{N} Payload_{T+1}^{\text{neighbor},n}}{\sum_{n=1}^{N} Payload_{T}^{\text{neighbor},n}} - 1, 1\right).$$

At operation 8056, adding the corresponding Reward value to the corresponding State-Action table to update the State-Action table; accumulating the Reward value $Q_T^{s,a} = Q_T^{s,a} + \alpha\left(R + \gamma \max Q_{T+1}^{s',a'} - Q_T^{s,a}\right)$, $\max Q_{T+1}^{s',a'}$ representing a maximum accumulated Reward value of all Actions corresponding to a cell state in a period T+1; and if T<10000, then letting T=T+1 and returning to operation 8052; otherwise, proceeding to operation 806.

At operation 806, transmitting, by the corresponding 5G cell network, the converged State-Action table to the digital twin network.

At operation 807, comparing, by the digital twin network, the received State-Action table with the State-Action table after the first training; and if a difference between values at each pair of corresponding positions in the two tables does not exceed 5%, determining that the digital twin network is normal and is not to be calibrated; otherwise, determining that the digital twin network is to be calibrated.

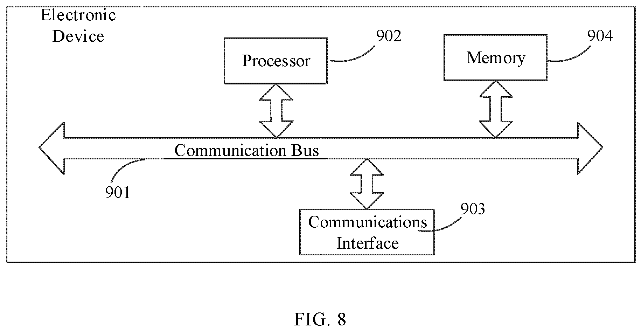

An embodiment of the present application further provides an electronic device configured to implement the method for training a reinforcement learning model as described above. FIG. 8 is a schematic structural diagram of an electronic device for implementing the various embodiments of the present application. The electronic device may vary greatly due to differences in configuration or performance, and may include a processor 902, a communications interface 903, a memory 904, and a communication bus 901. In some implementations, the processor 902, the communications interface 903 and the memory 904 are communicated with each other through the communication bus 901. The processor 902 may call a computer program which is stored on the memory 904 and is executable by the processor 902, to perform various operations in the method for training a reinforcement learning model in the embodiments described above, and the same technical effects as above can be achieved, and are not repeated here.

It should be noted that the electronic device in the embodiment of the present application includes, but is not limited to: a server, a terminal, or any other device besides a terminal.

An embodiment of the present application further provides a computer-readable storage medium having programs or instructions stored thereon, the programs or instructions, when executed by a processor, cause the processor to implement operations in the method for training a reinforcement learning model in embodiments described above, and the same technical effects as above can be achieved, and are not repeated here.

In some implementations, the processor is a processor in the terminal described in the above embodiments. The computer-readable storage medium includes, for example, a computer read-only memory (ROM), a random-access memory (RAM), a magnetic or optical disk, or the like.

An embodiment of the present application further provides a chip, including a processor and a communications interface coupled to the processor, the processor is configured to execute programs or instructions to implement operations in the the method for training a reinforcement learning model in the embodiments described above, and the same technical effects as above can be achieved, and are not repeated here.

It should be understood that the chip mentioned in the embodiment of the present application may be referred to as a system-on-chip, a system chip, a chip system, a system on chip, or the like.

An embodiment of the present application further provides a computer program/program product stored on a storage medium, the computer program/program product is to be executed by at least one processor to implement operations in the method for training a reinforcement learning model in the embodiments described above, and the same technical effects as above can be achieved, and are not repeated here.

It should be noted that, as used herein, the term "comprise" "include" or any variant thereof means to be non-exclusive so that a process, method, item or device including a series of elements includes not only said elements, but also other elements not explicitly listed, or inherent elements of such processes, methods, items or devices. In the absence of more limitations, an element defined by "comprising a..." does not exclude the existence of additional identical elements in the process, method, item or device including the element. Further, it should be noted that the scope of the methods and devices in the implementations of the present application is not limited to performing the functions in the order illustrated or discussed, but may include performing the functions in a substantially simultaneous manner or in a reverse order based on the functions recited, e.g., the described methods may be performed in an order different from that described, and various operations may be added, omitted, or combined. Additionally, features described with reference to certain examples may be combined in other examples.

Through the description of the above implementations, those skilled in the art can clearly understand that the method according to the above embodiment may be implemented by means of software plus a necessary general hardware platform. Obviously, it may also be implemented by hardware, but in most cases, the former is preferable. Based on such understanding, the technical solutions of the present application essentially or, in other words, a part thereof contributing to the existing art, can be embodied in a form of a computer software product, the computer software product is stored in a storage medium (such as an ROM/RAM, a disk, or an optical disc) and includes a number of instructions to make a terminal device (which may be a mobile phone, a computer, a server, an air conditioner or a network device, etc.) to execute the methods of the various embodiments of the present disclosure.

Although the embodiments of the present application have been described in connection with the drawings, the present application is not limited to the above-described implementations, which are intended to be illustrative rather than restrictive, and many modifications may be made by those of ordinary skill in the art without departing from the scope of the present application as defined by the appended claims.

## Claims

1. A method for training a reinforcement learning model, comprising:

   acquiring multiple pieces of portrait information of a physical communication network at a plurality of target times, each of the plurality of target times comprising a time point or a time period, and each of the multiple pieces of portrait information comprising description information of the physical communication network;
   respectively acquiring, based on each of the multiple pieces of portrait information, a digital twin network corresponding to each of the plurality of the target times, the digital twin network digitally replicating the physical communication network;
   performing first training on a target reinforcement learning model through the digital twin network based on at least one preset candidate policy, the target reinforcement learning model being configured to output a target service action corresponding to input network state information; and
   performing second training on the target reinforcement learning model subjected to the first training by using a current network state of the physical communication network.

2. The method according to claim 1, wherein the performing first training on a target reinforcement learning model through the digital twin network based on at least one preset candidate policy comprises:

for the digital twin network, acquiring first network state information from the digital twin network;
inputting the first network state information into the target reinforcement learning model to obtain a first service action corresponding to the first network state information, the target reinforcement learning model outputting the first service action according to the at least one candidate policy based on the first network state information; and applying the first service action to the digital twin network to determine a first reward label value based on a change condition of the digital twin network, the first reward label value corresponding to the first network state information and the first service action.

3. The method according to claim 2, wherein the applying the first service action to the digital twin network to determine the first reward label value based on a change condition of the digital twin network comprises:

applying the first service action to the digital twin network;
acquiring a target index of the digital twin network after a preset time;
setting the first reward label value to be a first value in response to the target indicator exceeding a minimum tolerance threshold; and
in response to the target index not exceeding the minimum tolerance threshold, calculating the first reward label value according to a preset rule.

4. The method according to claim 3, further comprising:
in response to the target index exceeding the minimum tolerance threshold, adjusting the first service action to be a service action previous to the preset time.

5. The method according to claim 3, wherein the target index comprises at least one of: a success rate of establishing a cell radio resource control (RRC) connection, a success rate of establishing an evolved radio access bear (ERAB), a radio connectivity rate, a switching success rate, a radio disconnection rate and an ERAB disconnection rate.

6. The method according to any one of claims 1 to 4, wherein

the target reinforcement learning model subjected to the first training comprises a correspondence relationship between network state information, a service action, and a reward label value; and
the performing second training on the target reinforcement learning model subjected to the first training by using a current network state of the physical communication network comprises:

acquiring second network state information based on a current network state of the physical communication network;
acquiring a second service action corresponding to the second network state information based on the correspondence relationship;
applying the second service action to the physical communication network, to determine a second reward label value based on a change condition of the physical communication network; and
updating, based on the second reward label value, a reward label value corresponding to the second network state information and the second service action in the correspondence relationship.

7. The method according to claim 1, further comprising:
after performing the second training on the target reinforcement learning model subjected to the first training by using the current network state of the physical communication network, continuing to perform the second training on the target reinforcement learning model by using the current network state of the physical communication network, until the target reinforcement learning model is converged.

8. The method according to claim 7, wherein the target reinforcement learning model is determined to be converged based on at least one of following conditions:

a total number of times of second training performed reaches a first threshold;
a training duration of the second training reaches a second threshold; or
after multiple times of second training, a change in the target reinforcement learning model is less than a third threshold.

9. The method according to claim 7, further comprising:
after the target reinforcement learning model is converged, calibrating the digital twin network based on a difference between the target reinforcement learning model being converged and the target reinforcement learning model subjected to the first training.

10. The method according to claim 1, wherein the portrait information comprises at least one of: configuration information of the physical communication network, state information of the physical communication network, attribute information of the physical communication network, attribute information of a user terminal in the physical communication network, service information of the user terminal, or environment information of a mobile channel of the user terminal.

11. An electronic device, comprising a processor and a memory, wherein the memory stores thereon programs or instructions to be executed by the processor, the programs or instructions, when executed by the processor, cause the processor to implement the method for training a reinforcement learning model according to any one of claims 1 to 10.

12. A computer-readable storage medium having computer programs or instructions stored thereon, wherein the computer programs or instructions, when executed by a processor, cause the processor to implement the method for training a reinforcement learning model according to any one of claims 1 to 10.

13. A chip, comprising a processor and a communications interface coupled to the processor, wherein the processor is configured to execute programs or instructions to implement the method for training a reinforcement learning model according to any one of claims 1 to 10.

101

Acquire multiple pieces of portrait information of a physical communication network at a plurality of target times

102

respectively acquire, based on each of the multiple pieces of portrait information, a digital twin network corresponding to each of the plurality of the target times

103

Perform first training on a target reinforcement learning model through the digital twin network based on at least one preset candidate policy

104

Perform second training on the target reinforcement learning model subjected to the first training by using a current network state of the physical communication network

FIG. 1

201

For the digital twin network, acquire first network state information from the digital twin network

202

Input the first network state information into the target reinforcement learning model to obtain a first service action corresponding to the first network state information

203

Apply the first service action to the digital twin network, to determine a first reward label value based on a change condition of the digital twin network

FIG.2

201

For the digital twin network, acquire first network state information from the digital twin network

202

Input the first network state information into the target reinforcement learning model to obtain a first service action corresponding to the first network state information

203

2031

Apply the first service action to the digital twin network

2032

Acquire a target index of the digital twin network after a preset time

2033

Set the first reward label value to be a first value in response to the target indicator exceeding a minimum tolerance threshold

2034

In response to the target index not exceeding the minimum tolerance threshold, calculate the first reward label value according to a preset rule

FIG.3

401

Acquire second network state information based on a current network state of the physical communication network

402

Acquire a second service action corresponding to the second network state information based on the correspondence relationship

403

Apply the second service action to the physical communication network, to determine a second reward label value based on a change condition of the physical communication network

404

Update, based on the second reward label value, a reward label value corresponding to the second network state information and the second service action in the correspondence relationship

FIG.4

501

Physical communication network

Channel environment

1.State                3.Reward                2.Action

Executor          Model

4.Update

502

Digital twin network

Channel environment

1.State                3.Reward                2.Action

Executor          Model

4.Update

FIG. 5

601

Acquire 10000 pieces of portrait information at 10000 moments uniformly collected in a 5G cell and a co-frequency neighboring cell, which have an overlapping coverage, over one week

602

Build digital twin networks replicating the 10000 moments one by one based on the portrait information, acquire BLER, i.e., State, of the 5G cell at the corresponding moment, and set Action as various values of P0

603

Acquire a Reward value and update the State-Action table

604

Complete the first training by the digital twin network and transmit the updated State-Action table to the corresponding 5G cell network

605

Perform, by the corresponding 5G cell network, a continuous optimization based on the received State-Action table

606

Transmit, by the corresponding 5G cell network, the converged State-Action table to the digital twin network

607

Compare, by the digital twin network, the received State-Action table with the State-Action table after the first training

FIG. 6

Judge, by the digital twin network, whether a replication of the 10000 pieces of portrait information pieces one by one is completed —6031

Yes

No

Build a corresponding digital twin network based on the piece of portrait information without any digital twin network corresponding thereto, and set i=0

Complete the first training by the digital twin network and transmit the updated State-Action table to the corresponding 5G cell network —604

Acquire BLER of the 5G cell at the corresponding time as State, set Action as P0=-100-6*i (in units of dBm), and set i=i+1 —6032

Adjust P0 of the digital twin network to a P0 ten seconds later, and acquire a plurality of indexes —6033

Any index exceeds a minimum tolerance threshold?

Yes

No

Calculate a corresponding Reward value in the State-Action table by a predefined equation —6034

Corresponding Reward value in the State-Action table R = -1

Add the corresponding Reward value in the State-Action table to the corresponding State-Action table to update the corresponding State-Action table —6035

i=5

No

Yes

FIG. 7

FIG. 8

## INTERNATIONAL SEARCH REPORT

| International application No. |
| --- |
| **PCT/CN2023/115874** |

**A.  CLASSIFICATION OF SUBJECT MATTER**

H04L41/14(2022.01)i;  G06N3/08(2023.01)i

According to International Patent Classification (IPC) or to both national classification and IPC

**B.  FIELDS SEARCHED**

Minimum documentation searched (classification system followed by classification symbols)

IPC:  H04L G06N

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 强化学习, 模型, 神经网络, 数字孪生, 孪生网络, 虚拟, 动作, 训练, 真实, 现实, 物理, 实体, reinforcement learning, RL, Q-Learning, Neural Network+, digital twin network+, DTN, virtual, action, train+, real, physical, entity

**C.  DOCUMENTS CONSIDERED TO BE RELEVANT**

| Category* | Citation of document, with indication, where appropriate, of the relevant passages | Relevant to claim No. |
| --- | --- | --- |
| A | KR 102404007 B1 (KOREA TESTING LAB KTL) 31 May 2022 (2022-05-31) description, paragraphs [0032]-[0070] | 1-13 |
| A | CN 112367130 A (HENAN UNIVERSITY OF TECHNOLOGY) 12 February 2021 (2021-02-12) entire document | 1-13 |
| A | CN 114900438 A (CHINA TELECOM CORP., LTD.) 12 August 2022 (2022-08-12) entire document | 1-13 |
| A | CN 111835565 A (CHONGQING JINMEI COMMUNICATION CO., LTD.) 27 October 2020 (2020-10-27) entire document | 1-13 |
| A | US 2022245462 A1 (WORLD WIDE TECHNOLOGY HOLDING COMPANY LLC) 04 August 2022 (2022-08-04) entire document | 1-13 |

☐ Further documents are listed in the continuation of Box C.       ☑ See patent family annex.

| | | |
| --- | --- | --- |
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"  document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
| --- | --- |
| **13 November 2023** | **21 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/115874**

| Patent document cited in search report | | | Publication date (day/month/year) | Patent family member(s) | | | Publication date (day/month/year) |
|---|---|---|---|---|---|---|---|
| KR | 102404007 | B1 | 31 May 2022 | None | | | |
| CN | 112367130 | A | 12 February 2021 | None | | | |
| CN | 114900438 | A | 12 August 2022 | None | | | |
| CN | 111835565 | A | 27 October 2020 | CN | 111835565 | B | 20 June 2023 |
| US | 2022245462 | A1 | 04 August 2022 | US | 2022245441 | A1 | 04 August 2022 |
| | | | | US | 2022247643 | A1 | 04 August 2022 |
| | | | | WO | 2022165143 | A1 | 04 August 2022 |
| | | | | US | 11606265 | B2 | 14 March 2023 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211344273